# EUROPÄISCHE PATENTSCHRIFT

(11) **EP 2 596 857 B1**
(45) Veröffentlichungstag und Bekanntmachung des Hinweises auf die Patenterteilung: **22.10.2014**
(21) Anmeldenummer: 12007717.7
(22) Anmeldetag: 14.11.2012
(51) Int. Cl.: B01F 11/00, B01F 13/00, B01F 15/02, F04B 9/127, F04B 53/12, A61B 17/88

(54) **Lager- und Mischvorrichtung für Knochenzement**
Storage and mixing device for bone cement
Appareil de stockage et mélange de ciment osseux

(30) Priorität: 25.11.2011 DE 102011119377
(43) Veröffentlichungstag der Anmeldung: 29.05.2013
(73) Patentinhaber: Heraeus Medical GmbH, 61273 Wehrheim (DE)
(72) Erfinder: Vogt, Sebastian, 99092 Erfurt (DE); Schnieber, Tim, 60439 Frankfurt (DE)
(74) Vertreter: Panten, Kirsten

(56) Entgegenhaltungen:
- WO-A1-99/42205
- DE-B3-102009 031 178
- GB-A- 912 237
- GB-A- 1 300 093
- SU-A2- 960 022
- US-A- 3 417 971
- US-A- 3 738 535
- US-A1- 2003 155 381

## Beschreibung

Die Erfindung betrifft eine Lager- und Mischvorrichtung zum Lagern und Mischen einer flüssigen und einer Feststoffkomponente gemäß den Merkmalen des Oberbegriffs des Anspruchs 1, mit einer ersten Kammer, die die Feststoffkomponente enthält und einen Anschluss für eine Unterdruckquelle aufweist und die durch eine zu öffnende Abtrennung von einer zweiten Kammer getrennt ist, wobei die zweite Kammer die die flüssige Komponente enthält. Insbesondere handelt es sich um eine Vorrichtung zum Mischen und Lagern einer Monomerflüssigkeit und eines Pulvers zur Herstellung von Knochenzement.

Polymethylmethacrylat-(PMMA)-Knochenzemente gehen auf grundlegende Arbeiten von Sir Charnley zurück (Charnley, J.: Anchorage of the femoral head prosthesis of the shaft of the femur. J. Bone Joint Surg. 42 (1960) 28-30.). Sie bestehen aus einer flüssigen Monomerkomponente und einer Pulverkomponente. Die Monomerkomponente enthält im Allgemeinen das Monomer Methylmethacrylat und einen darin gelösten Aktivator (N,N-Dimethyl-p-toluidin). Die Pulverkomponente, auch als Knochenzementpulver bezeichnet, enthält ein oder mehrere Polymere, die auf Basis von Methylmethacrylat und Comonomeren, wie Styren, Methylacrylat oder ähnlichen Monomeren durch Polymerisation hergestellt sind, einen Röntgenopaker und den Initiator Dibenzoylperoxid.

Die Monomerflüssigkeit wird üblicherweise in Glasampullen oder auch in Beuteln aus Kunststoffverbundfolien oder aus Aluminiumverbundfolien gelagert. Diese primären Monomerbehälter müssen unmittelbar vor dem Anmischen des Zementes durch manuelles Aufbrechen oder Anstechen oder Aufschneiden geöffnet werden. Das Zementpulver wird üblicherweise in Papier-Kunststoffbeuteln gelagert. Diese müssen ebenfalls vor dem Anmischen durch Aufschneiden oder auch Aufreißen geöffnet werden.

Beim Vermischen der Pulverkomponente mit der Monomerkomponente entsteht durch Quellen der Polymere der Pulverkomponente im Methylmethacrylat ein plastisch verformbarer Teig, der eigentliche Knochenzement. Beim Vermischen der Pulverkomponente mit der Monomerkomponente reagiert der Aktivator N,N-Dimethyl-p-toluidin mit Dibenzoylperoxid unter Bildung von Radikalen. Die gebildeten Radikale initiieren die radikalische Polymerisation des Methylmethacrylates. Mit fortschreitender Polymerisation des Methylmethacrylates erhöht sich die Viskosität des Zementteigs, bis dieser erstarrt.

Polymethylmethacrylat-Knochenzemente können in geeigneten Mischbechern mit Hilfe von Spateln durch Vermischen des Zementpulvers mit der Monomerflüssigkeit vermischt werden. Nachteilig ist an dieser Vorgehensweise, dass Lufteinschlüsse im gebildeten Zementteig vorhanden sein können, die später eine Destabilisierung des Knochenzements verursachen können. Aus diesem Grund wird das Vermischen von Knochenzementpulver mit der Monomerflüssigkeit in Vakuummischsystemen bevorzugt, weil durch Mischen im Vakuum Lufteinschlüsse aus dem Zementteig weitgehend entfernt werden (Breusch S.J. et al.: Der Stand der Zementiertechnik in Deutschland. Z. Orthop. 1999, 137: 101-07). Im Vakuum gemischte Knochenzemente haben eine deutlich verringerte Porosität und zeigen daher verbesserte mechanische Eigenschaften. Es wurden eine Vielzahl von Vakuum-Zementiersystemen offen gelegt, von denen exemplarisch folgende genannt sind: US 6,033,105 A, US 5,624,184 A, US 4,671,263 A, US 4,973,168 A, US 5,100,241 A, WO 99/67015 A1, EP 1 020 167 A2 , US 5,586,821 A, EP 1 016 452 A2, DE 3 640 279 A1, WO 94/26403 A1, EP 0 692 229 A1, EP 1 00 590 1 A2 , US 5 344 232 A , und EP 1 920 738 A2.

Eine Weiterentwicklung stellen Vakuumzementiersysteme dar, in denen sowohl das Zementpulver als auch die Monomerflüssigkeit bereits in separaten Kompartimenten der Mischsysteme verpackt sind und erst unmittelbar vor der Zementapplikation im Zementiersystem miteinander vermischt werden, wie sie zum Beispiel in US 5,997,544 A,

EP 0 692 229, US 6 709 149 beschrieben sind. Ein wesentliches Problem dieser Systeme ist jedoch die Sterilisation des gesamten Systems einschließlich des Zementpulvers und der zuvor steril filtrierten Monomerflüssigkeit.

In DE 10 2009 031178 A1 wurde daher eine Vorrichtung zum Mischen und Austragen von Knochenzement gemäß dem Oberbegriff des Anspruchs 1 vorgeschlagen, wobei im Bereich des ersten Zylinderendes ein axial bewegbares zweiteiliges Kolbensystem angeordnet ist, das einen Sterilisationskolben und einen Dichtungskolben aufweist. Der Sterilisationskolben und der Dichtungskolben sind getrennt auf der Betätigungsstange axial bewegbar, wobei der Sterilisationskolben den Mischzylinder gasdurchlässig abschließt und der Dichtungskolben den Mischzylinder gasdicht abschließt.

Nachteilig ist bei diesem System, dass die Vermischung der flüssigen Zementkomponente mit der pulverförmigen Komponente durch manuelle Betätigung eines Mischstabes mit einem Mischorgan erfolgt. Ein Nachteil der manuell betriebenen Vermischung ist neben der erforderlichen Kraftaufwendung, dass das Mischergebnis stark von der Durchführung des Mischvorgangs durch die jeweilige Person abhängt. Die eingesetzte Kraft der Person, die Anzahl der vertikalen Mischbewegungen, der Drehwinkel der Mischbewegungen, die maximale Auslenkung des Mischorgans in Richtung Kolbenkopf und Kolbenboden und die gesamte Mischzeit beeinflussen das Mischergebnis hinsichtlich der Homogenität des Zementteigs. Dadurch kann die Zementqualität im Vergleich zwischen unterschiedlichen medizinischen Anwendern deutlich schwanken.

Aus GB 1 300 093 A ist eine Mischvorrichtung für Stoffe, bei denen zumindest die Hauptkomponente plastisch ist, bekannt, wobei die Mischung durch eine Auf- und Abbewegung einer mit einem Mischorgan versehenen Stange erfolgt. Als Beispiel für einen Stangenantrieb wird ein doppeltwirkender Druckmittelzylinder genann, der pneumatische oder hydraulisch betrieben wird.

In SU960022 A offenbart eine Mischvorrichtung für viskose mit einem Zylinder, der einen Kolben, eine hohle Stange mit Löchern zur Materialübertragung und einen sich hin- und her bewegenden Antrieb und ein koaxial angeordnetes Einwegeabsperrorgan, das den Zylinder mit Vakuum verbindet, aufweist. In der hohlen Stange ist ein Stab angeordnet, dessen oberes Ende mit einem zwei Wege-Antrieb verbunden ist.

Es ist die Aufgabe der vorliegenden Erfindung, eine Vorrichtung zum Mischen von Knochenzement zu schaffen, in der der Mischvorgang zum Einen kräfteschonender und zum Anderen unabhängig von dem jeweiligen medizinischen Anwender mit reproduzierbarem Ergebnis erfolgt.

Zur Lösung dieser Aufgabe wird eine Vorrichtung zum Lagern und Mischen von Knochenzement mit den Merkmalen des Anspruchs 1 vorgeschlagen. In den abhängigen Ansprüchen sind bevorzugte Weiterbildungen definiert.

Die erfindungsgemäße Lager- und Mischvorrichtung dient zum Mischen einer flüssigen Komponente und einer Feststoflkomponente. Sie enthält eine erste, die Feststoffkomponente enthaltende Kammer, eine zweite, die flüssige Komponente enthaltende Kammer und eine zu öffnende Abtrennung zwischen der flüssigen Komponente und der ersten Kammer. Die erste Kammer weist einen Anschluss für eine Unterdruckquelle auf und in dieser ersten Kammer ist eine durch Druckdifferenz antreibbare Mischeinrichtung angeordnet. Bei der ersten Kammer handelt es sich um einen Kolbenraum, wobei ein Kolben den Kolbenraum in einen ersten Kolbenraumabschnitt und einen zweiten Kolbenraumabschnitt teilt und ein Absperrorgan aufweist, welches an den Kolbenumkehrpunkten umgeschaltet wird und in geöffnetem Zustand den ersten Kolbenraumabschnitt mit dem zweiten Kolbenraumabschnitt verbindet. Der Anschluss für die Unterdruckquelle ist im zweiten Kolbenraumabschnitt angeordnet ist, ein elastisch rückstellendes Bauelement ist zwischen dem Kolben und einer dem Kolben gegenüberliegenden Trennwand des zweiten Kolbenraumabschnitts angeordnet und eine Gaszuführung ist im ersten Kolbenraumabschnitt (103) angeordnet.

Die erste Kammer hat bevorzugt eine längliche Form und entlang ihrer Länge über einen weiten Bereich denselben Querschnitt. Besonders bevorzugt ist ein Zylinder, es sind aber auch ein Quader oder auch andere Prismen denkbar.

In der zweiten Kammer befindet sich die zu vermischende flüssige Komponente. Die zweite Kammer kann eine beliebige Form haben und dient zunächst auch als Vorratsgefäß für die flüssige Komponente. Dabei kann die zweite Kammer direkt als Baueinheit in die Lager- und Mischvorrichtung integriert sein oder aber auch eine in der Lager- und Mischvorrichtung angeordnete sterilisierte Verpackungseinheit oder ein Vorratsbehälter für die flüssige Komponente sein. Bewährt haben sich als sterilisierte Vorratsbehälter insbesondere Ampullen aus Glas, die besonders, wenn die Vorrichtung zum Anmischen von Knochenzement dient, den Vorteil haben, dass sie gut sterilisiert werden können und auch während der Lagerung keinerlei Verunreinigung auftreten kann. Es sind jedoch auch andere Vorratsgefäße denkbar.

Die flüssige Komponente ist während der Lagerung durch eine Abtrennung flüssigkeitsdicht von der ersten Kammer getrennt, die Abtrennung kann jedoch geöffnet werden, so dass es möglich ist, die Flüssigkeit in die erste Kammer mit der Feststoffkomponente zu transferieren.

Eine vorteilhafte Ausgestaltung der erfindungsgemäßen Vorrichtung zeichnet sich dadurch aus, dass die erste Kammer in einen Kolbenraum und einen Mischraum unterteilt ist. In dem Kolbenraum ist ein Kolben einer Mischeinrichtung angeordnet. Der Kolben ist mit einem Mischorgan verbunden, das die beiden Komponenten im Mischraum miteinander vermischt. Der Kolbenraum weist einen Anschluss für eine Unterdruckquelle auf. Über diesen Anschluss kann die Vorrichtung mit einer Vakuumpumpe verbunden werden. Die Vakuumpumpe erzeugt dann jenen Unterdruck, der in der ersten Kammer vorherrschen soll, um die Mischeinrichtung zu betreiben. Wie später noch ausführlich beschrieben wird, sorgt der Unterdruck zunächst für ein Einfließen der flüssigen Komponente, insbesondere der Monomerflüssigkeit, in das Knochenzementpulver. In einer bevorzugten Ausführungsform der Erfindung sorgt der Unterdruck außerdem dafür, dass die Abtrennung zur zweiten Kammer oder Vorratsbehälter mit der flüssigen Komponente geöffnet wird. Die Anordnung eines Vakuumanschlusses in dem Kolbensystem hat sich aufgrund der leichten Verfügbarkeit als besonders vorteilhaft herausgestellt.

Bevorzugt wird durch Unterdruck oder Vakuum ein Kolben in einem Kolbenraum bewegt. Der Kolbenraum ist bevorzugt ein Hohlzylinder, der an einem Ende mit einem Kolbenverschluss abgedeckt ist und am anderen Ende durch eine Trennwand von dem Mischraum abgetrennt ist. An das der Trennwand gegenüberliegende Ende des Mischraums ist eine Verbindungsleitung zur zweiten Kammer für die flüssige Komponente angeschlossen.

Der Kolben ist entlang der Zylinderachse beweglich und liegt gasdicht an den Seitenwänden des Kolbenraums an. In einer besonders bevorzugten Ausführungsform ist der Kolben mit einem axial beweglichen Stab über ein Rotationsgelenk formschlüssig oder kraftschlüssig so verbunden, dass eine Bewegung des Stabes um eine Achse unabhängig von einer Rotation des Kolbens möglich ist. Der Kolben unterteilt den Kolbenraum in einen ersten und einen zweiten Kolbenraumabschnitt und enthält ein Absperrorgan, das im geöffneten Zustand Kolbenraumabschnitte miteinander verbindet. In geschlossenem Zustand verschließt das Absperrorgan diesen Durchgang gasdicht. Das Absperrorgan wird an einem Umkehrpunkt des Kolbens vom geschlossenen in den offenen Zustand geschaltet, während er am anderen Umkehrpunkt vom offenen in den geschlossenen Zustand geschaltet wird. Durch Vakuum oder komprimiertes Gas wird der Kolben in Bewegung versetzt, so dass er sich in dem Kolbenraum hin- und herbewegt, und damit den Stab in eine Rotationsbewegung versetzt. Durch ein am Stab angebrachtes Mischorgan wird der Knochenzement gemischt.

Das im Kolben angeordnete Absperrorgan weist mindestens einen Durchgang auf, der in offener Stellung den ersten Kolbenabschnitt auf einer Seite des Kolbens mit dem zweiten Kolbenraumabschnitt auf der anderen Seite des Kolbens gasdurchlässig verbindet und das in geschlossener Stellung beide Kolbenraumabschnitte gasdicht voneinander trennt.

Bevorzugt ist der Querschnitt des Durchgangs im Absperrorgan größer als der Querschnitt des Gasablasses. Ebenfalls ist bevorzugt, dass der Querschnitt des Durchgangs im Absperrorgan größer als der Querschnitt der Gaszuführung ist. Dadurch wird gewährleistet, dass ein vollständiger Druckausgleich mit der umgebenden Atmosphäre solange erfolgt, bis das Absperrorgan an den Kolbenumkehrpunkten umgeschaltet wird.

Bevorzugt handelt es sich bei dem Absperrorgan um ein Drehventil. Besonders bevorzugt wird das Drehventil durch zwei Stifte gesteuert, die am Außenumfang des Drehventils befestigt sind und ausgehend von der Drehachse des Drehventils in einem Winkel von <180° zueinander angeordnet sind. Das Drehventil wird von der geöffneten in die geschlossene Position und umgekehrt umgeschaltet, indem der Stift durch die Bewegung des Kolbens gegen eine Wand des Kolbenraums stößt. Dabei wird der Stift gegen den Kolben gedrückt, das Drehventil dreht sich um seine Achse und verstellt sich vom offenen Zustand in den geschlossenen oder umgekehrt.

Es sind jedoch auch andere Möglichkeiten denkbar. So kann auch ein verschiebbarer Verschluss, wie zum Beispiel ein an einer Seite verschlossener Hohlzylinder mit seitlichen Öffnungen durch Anschlagen an den Wänden des Kolbenraums in eine geöffnete und geschlossene Position verschoben werden.

Durch den Kolben wird der Kolbenraum in zwei Kolbenraumabschnitte unterteilt. Der Kolbenraum zwischen Trennwand und Kolben ist mit einem Anschluss für eine Unterdruckquelle oder einem Vakuumanschluss versehen, während der andere Kolbenraum eine Gaszuführung aufweist.

Der Kolben ist über ein Rotationsgelenk mit einem Stab verbunden, an dem ein Mischorgan angebracht ist. Der Stab ist durch die Trennwand zwischen Kolbenraum und Mischraum geführt.

Zwischen Kolben und der Trennwand zwischen Kolbenraum und Mischraum ist ein elastisch rückstellendes Bauelement angeordnet. Bevorzugt handelt es sich bei dem elastisch rückstellenden Bauelement um ein Federelement, besonders bevorzugt um eine Spiralfeder.

Im geschlossenen Zustand des Absperrorgans bewegt sich der Kolben durch die Kräfte, die durch die Druckdifferenz und Druckausgleich auf den Kolben ausgeübt werden. Dies bedeutet, dass sich bei Anlegen von Unterdruck bei geschlossenem Absperrorgan der Kolben auf die Trennwand zubewegt. Trifft der Kolben auf die Trennwand, so wird das Absperrorgan in den offenen Zustand verstellt und es kann ein Druckausgleich erfolgen. Durch die Rückstellkraft des elastisch rückstellenden Bauelementes wird der Kolben in Richtung Kolbenraumabdeckung bewegt. Dabei verkleinert sich der Kolbenabschnitt mit der Gaszuführung und der Kolben schlägt an der gegenüberliegenden Wand an und das Absperrorgan wird wieder geschlossen. Dieser Vorgang wiederholt sich, solange Gas abgeführt oder zugeführt wird.

Dieser Vorgang wird durch sich abwechselnde Druckdifferenz und Druckausgleich in beiden Kolbenraumabschnitten bewirkt. Dabei ist die Druckdifferenz von entscheidender Bedeutung, es ist unerheblich, ob auf der Seite der Gaszuführung ein Überdruck angelegt wird, oder ob auf der Seite des Anschlusses für den Unterdruck ein Unterdruck angelegt wird. Bevorzugt wird auf der Seite des Anschlusses für Unterdruck ein Unterdruck angelegt, da Vakuum, das auch zum Entgasen des Knochenzements dient, bereits vorhanden ist.

Der Kolben ist über ein Verbindungselement, wie zum Beispiel einen Stab mit einem Mischorgan verbunden. Bevorzugt ist der Stab drehbar, zum Beispiel über ein Rotationsgelenk, wie ein Torsionsgelenk oder Kugelgelenk.

Der Stab ist durch die Trennwand geführt, die eine Öffnung mit einem Durchmesser besitzt, die dem Außendurchmesser des Stabes entspricht. In dieser Öffnung ist der Stab axial beweglich angeordnet.

Der Stab hat bevorzugt mindestens ein steiles Gewinde, in das ein Zapfen greift, der in der Öffnung der Trennwand unbeweglich angeordnet ist. Während der axialen Kolbenbewegung bewegt sich der verbundene Stab mit. Gleichzeitig dreht sich der Stab durch den Eingriff des unbeweglichen Zapfens in dem Gewinde um seine Achse. Dadurch führt das am Ende des Stabes angeordnete Mischorgan ebenfalls gleichzeitig eine lineare, axiale Bewegung und eine Drehbewegung aus. Durch diese kombinierten Bewegungen wird der Knochenzement vermischt.

Der Stab sollte so lang sein, dass das Mischorgan den Boden des Mischraums berührt, damit auch am Boden des Mischraums der Knochenzement vermischt wird. Bevorzugt kann der Stab im Kolben soweit in Richtung des geschlossenen Endes bewegt werden, dass das Mischorgan mit seiner Oberseite an der Unterseite des Kolbenverschlusses anliegt. Dadurch können durch das Mischorgan auch Zementreste an der Unterseite des Kolbenverschlusses sicher abgestreift werden. Vorteilhaft ist es, wenn das Mischorgan mit seinem äußeren Rand an der Innenseite der Kartusche anliegt.

Erfindungsgemäß erfolgt die Vermischung ohne manuelle Krafteinwirkung durch eine Vakuum-getriebene oder Druck-getriebene Antriebseinheit. Gegenwärtig marktübliche Zementiersysteme enthalten Vakuumpumpen, die ein Vakuum bis zu 100-150 mbar erzeugen. Die erfindungsgemäße Vorrichtung kann dieses Vakuum von ungefähr 150 mbar für den Antrieb nutzen.

Die Vorrichtung wird zum Vermischen von Polymethylmethacrylat-Knochenzementen und von anorganischen Knochenzementen verwendet, die als Hauptbestandteile Calciumphosphat und/oder Calciumsulfat enthalten. Dabel kommen besonders Calciumphosphatzemente auf Basis von amorphen Calciumphosphat, α-Tricalciumphosphat, ß-Tricalciumphosphat, Tetracalciumphosphat, Brushit, Monetit und Octacalciumphosphat sowie deren Gemischen in Betracht. Die Calciumsulfat-Knochenzemente basieren auf Calciumsulfat-Hemihydrat.

Eine vorteilhafte Ausgestaltung des erfindungsgemäßen Knochenzementsystems zeichnet sich dadurch aus, dass ein Basiselement vorhanden ist, das ein Verbindungsmittel aufweist für eine kraft- und/oder formschlüssige Verbindung mit der Vorrichtung, insbesondere einer Austragsöffnung der Vorrichtung. Das Basiselement dient zur Aufnahme der ersten und der zweiten Kammer als auch der Verbindungsleitung. Da die erste Kammer zur Aufnahme der Feststoffkomponente, die auch den Mischraum enthält, auch zum Austragen des Knochenzements genutzt werden kann, ist es vorteilhaft, wenn der Teil der Vorrichtung, der die erste Kammer enthält, reversibel von dem Basiselement trennbar ist. Dies kann durch ein Koppelelement erreicht werden. Vorteilhafterweise handelt es sich bei dem Koppelelement um ein Gewinde, auf welches die Austragsöffnung der Teil der Vorrichtung, der die erste Kammer enthält, aufgeschraubt werden kann. So ist eine sichere Verbindung gewährleistet.

Erfindungsgemäß enthält die Lager- und Mischvorrichtung eine zweite Kammer für die flüssige Komponente, insbesondere die Monomerflüssigkeit. Zur Herstellung des Knochenzements muss Monomerflüssigkeit in das Knochenzementpulver eingebracht werden. Nach einer gewissen Zeitspanne härtet der Knochenzement dann aus. Daher kann der Knochenzement nicht austragsfertig in der Vorrichtung ausgeliefert werden. Es ist somit notwendig, dass das Knochenzementpulver und die Monomerflüssigkeit bis kurz vor dem Austragen des Knochenzements getrennt gelagert werden müssen. Bevorzugt enthält die zweite Kammer eine sterilisierte Vorratseinheit mit der Monomerflüssgkeit. Als leicht zu desinfizieren haben sich insbesondere Glasbehälter, wie z.B. Ampullen erwiesen. Um den Zufluss der Monomerflüssigkeit zu steuern, kann zwischen erster und zweiter Kammer ein Ventilmittel angeordnet sein. Dieses Ventilmittel steuert und/oder löst den Zufluss des Monomers aus der zweiten Kammer in den Mischraum aus.

Eine besonders bevorzugte Weiterbildung der Erfindung sieht vor, dass die Lager- und Mischvorrichtung ein Öffnungselement aufweist, das durch die Druckdifferenz des angelegten Unterdrucks den Weg der flüssigen Komponente in den Mischraum mittelbar oder unmittelbar freigibt.

Unter einem mittelbaren Öffnen eines Behälters durch die Druckdifferenz ist zu verstehen, dass ein bewegliches Mittel, wie zum Beispiel ein Stößel, durch den äußeren Druck relativ zu dem Behälter bewegt wird und diesen dadurch mechanisch öffnet, also beispielsweise durch Aufbrechen, Aufschneiden oder Einstechen eines Teils des Behälters beziehungsweise einer Behälterwand. Dazu wird das Öffnungsmittel beweglich in der Lager- und Mischvorrichtung gelagert. Der Differenzdruck wirkt also auf das Mittel zur Öffnung, was In einer Bewegung des Mittels resultiert.

Eine mittelbare Öffnung ist auch dann gegeben, wenn sich sowohl der Behälter als auch die Öffnungsvorrichtung bewegen, also beide beweglich im Behälteröffnungssystem gelagert sind.

Ein unmittelbares Öffnen ist dann gegeben, wenn ein Behälter oder ein Teil eines Behälters durch die Druckdifferenz auf ein statisches Öffnungsmittel gedrückt wird. Der Differenzdruck wirkt hierbei also direkt und unmittelbar auf den beweglichen Behälter, so dass sich der Behälter gegen das Öffnungsmittel bewegt. Der Behälter ist dazu beweglich in der Vorrichtung gelagert. Indem der Behälter gegen das Öffnungsmittel gedrückt wird, wird er aufgebrochen, aufgeschnitten oder eingestochen und damit mechanisch geöffnet.

Dabei kann vorgesehen sein, dass in der Vorrichtung ein Öffnungselement relativ zu der zweiten Kammer oder dem Vorratsbehälter bewegbar angeordnet ist. Dabei kann das Öffnungselement oder der Behälter oder es können beide beweglich in der Vorrichtung gelagert sein.

Ferner kann vorgesehen sein, dass ein beweglicher Stößel das Öffnungselement bildet, welcher in der Vorrichtung derart verschiebbar angeordnet ist, dass die Kammer oder der Vorratsbehälter für die flüssige Komponente durch die Bewegung des Stößels zu öffnen ist.

Eine Weiterbildung der Erfindung sieht vor, dass der bewegliche Stößel eine gabelförmige Führung zum Führen eines aufzubrechenden Teils des Behälters umfasst und/oder die Innenseite des Stößels abgeschrägt ist.

Dabei ist es von Vorteil, wenn durch die Bewegung des Stößels zumindest ein Teil des Behälters zerbrochen, abgebrochen, aufgeschnitten, abgeschnitten oder eingestochen werden kann, so dass der Stößel als Öffnungsvorrichtung wirkt.

Alternativ kann es von Vorteil sein, wenn der Stößel mit dem Behälter derart verbunden ist, dass durch die Bewegung des Stößels der Behälter auf einen Teil der Vorrichtung gedrückt wird, wobei der Behälter dadurch zerbrochen, aufgebrochen, aufgeschnitten oder eingestochen wird. So kann der bewegliche Stößel zum Beispiel ein einseitig geschlossener Hohlkörper sein, in dem der Behälter angeordnet ist.

Auch kann durch die Bewegung des Stößels der Behälter gekippt werden, wobei ein Teil des Behälters in dem Behälteröffnungssystem derart fixiert wird, dass der fixierte Teil des Behälters abgebrochen wird.

Auch ein Hebel kann als Öffnungseinrichtung dienen, welcher durch die Bewegung des Stößels mit dem Behälter gedreht oder gekippt wird und durch die Drehung eines Hebelarms des Hebels zumindest ein Teil des Behälters abgebrochen, aufgeschnitten oder eingestochen wird.

In einer alternativen Ausführungsform ist vorgesehen, dass der Behälter eine vorzugsweise flexible Wand umfasst und die Öffnungsvorrichtung ein Dom oder eine Klinge ist, wobei der Behälter beweglich im Behälteröffnungssystem angeordnet ist und/oder die Wand verformbar ist. Dabei wird die Wand des Behälters, wenn dieser auf den Dom zubewegt wird, aufgeschnitten oder eingestochen und dadurch geöffnet.

Auch kann vorgesehen sein, dass der oder die Behälter eine Flüssigkeit, insbesondere eine Monomerflüssigkeit, und/oder ein Pulver, insbesondere ein Zementpulver, beinhalten, wobei der Inhalt nach dem Öffnen aus dem Behälter unter Einwirkung des Unterdrucks, insbesondere eines Vakuums, austritt und anschließend mit einem Pulver, insbesondere einem Zementpulver, oder einer Flüssigkeit, insbesondere einer Monomerflüssigkeit, unter Einwirkung des Unterdrucks, insbesondere eines Vakuums, durchmischt wird.

Besonders bevorzugt enthält der Behälter eine Flüssigkeit, die eine Monomerkomponente, vorzugsweise ein polymerisierbares Monomer, wie zum Beispiel Methylmethacrylat, und einen darin gelösten Aktivator, enthält.

Der Mischraum enthält bevorzugt ein Pulver, das ein oder mehrere Polymere enthält, insbesondere auf der Basis von Polymethylmethacrylat und dessen Comonomeren.

Damit die flüssige Komponente, insbesondere die Monomerflüssigkeit aus dem Vorratselement in die Vorrichtung strömen kann, weist das Basiselement eine Verbindungsleitung auf. Die Monomerflüssigkeit fließt aus dem Vorratsbehälter durch die Verbindungsleistung in die Mischvorrichtung, insbesondere in den Mischraum. Dort findet eine Vermischung der Flüssigkeitskomponente, insbesondere der Monomerflüssigkeit, mit der Feststoffkomponente, insbesondere dem Knochenzementpulver statt, um den Knochenzement zu bilden.

Ein großer Vorteil der vorliegenden Erfindung ist, dass bei der Anwendung von Vakuumzementiersystemen bisher ohnehin im Operationssaal vorhandene Vakuum nicht nur zur Entfernung von Gaseinschlüssen des Zementteigs genutzt wird, sondern dass das Arbeitsvermögens des Vakuums auch für den Transfer des Monomers in das Zementpulver und das Vermischen der Monomerflüssigkeit mit dem Zementpulver zu einem homogenen Zementteig genutzt wird. In einer besonders vorteilhaften Ausführungsform der Erfindung dient es ebenfalls zum Öffnen des Monomerbehälters, so dass diese Vorgänge selbsttätig alleine durch Vakuumeinwirkung ablaufen und eine manuelle Durchführung dieser Vorgänge durch den medizinischen Anwender nicht mehr notwendig ist. Es wird damit dem medizinischen Anwender ein seibstmischendes Vakuumzementiersystem bereitgestellt.

Im Folgenden wird eine bevorzugte Ausführungsform anhand der beiliegenden Zeichnungen genauer beschrieben. Es zeigen:
Fig. 1 eine schematische Zeichnung einer erfindungsgemäßen Lager- und Mischvorrichtung im Schnitt, und
Fig. 2 einen Ausschnitt aus einer zweiten Ausführungsform der Erfindung im Schnitt.

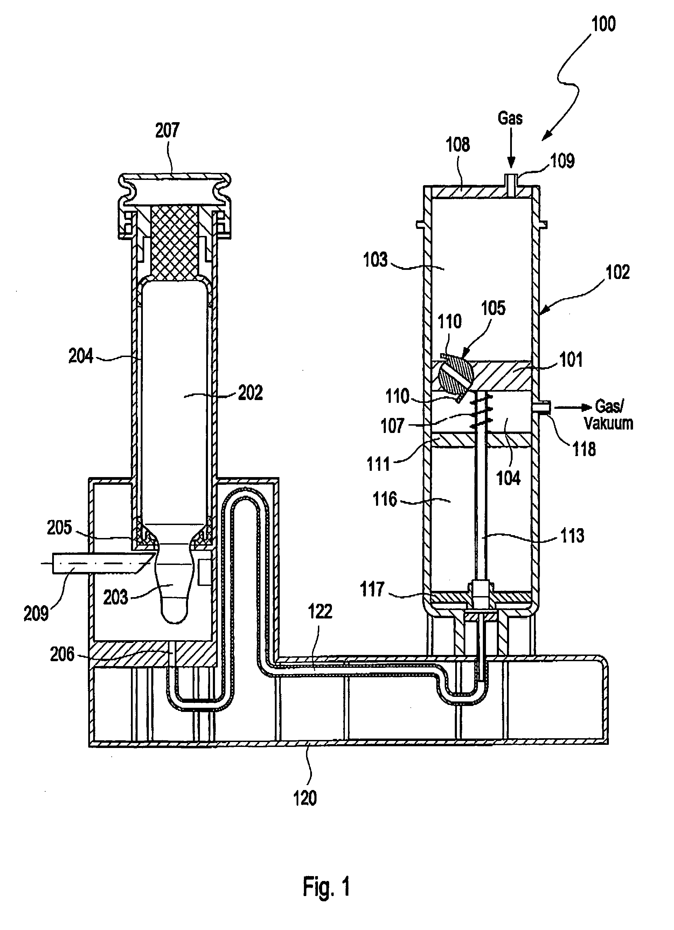

In Fig. 1 ist eine erfindungsgemäße Lager- und Mischvorrichtung 100 dargestellt. Die Lager- und Mischvorrichtung 100 weist eine Vorrichtung 102 zum Mischen und Austragen von Knochenzement auf. Diese Vorrichtung 102 ist in dem dargestellten Ausführungsbeispiel auf einem Basiselement 120 gelagert. Jenes Basiselement 120 trägt auch ein Vorratsgefäß mit Vorratskammer 204 für Monomerflüssigkeit. Die Lager- und Mischvorrichtung 100 dient zum Mischen des Knochenzements. Dazu wird Knochenzementpulver in einen Mischraum 116 der Lager- und Mischvorrichtung 100 eingefüllt. Das Knochenzementpulver kann dann mit der Monomerflüssigkeit gemischt werden, um Knochenzement zu bilden.

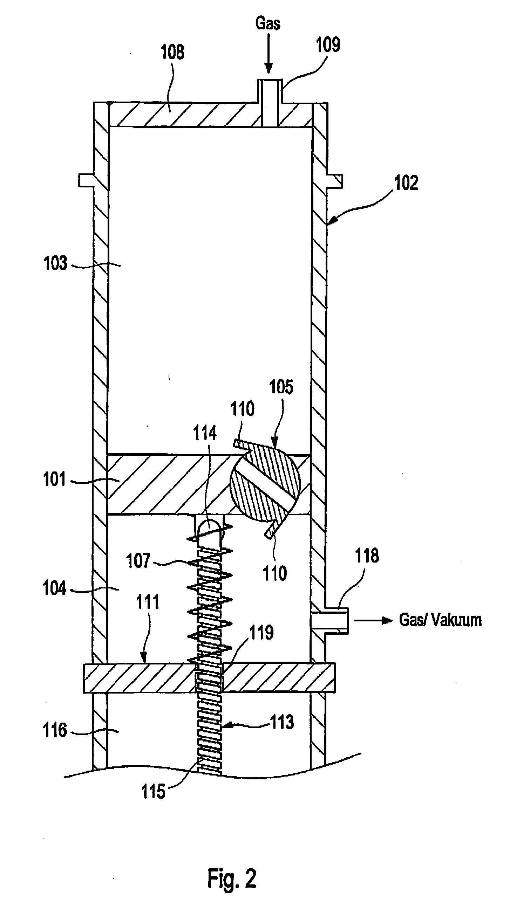

Die Vorrichtung 102 zum Mischen und Austragen von Knochenzement weist einen Mischraum 116 auf. In dem Mischraum 116 ist ein Mischorgan 117 angeordnet, welches über einen Gewindestab 113 mit einem Kolben 101 verbunden ist. Der Kolben 101 lässt sich durch Anlegen von Vakuum am Gasauslass 118 in Bewegung versetzen, womit der Knochenzement gemischt werden kann, was weiter unten unter Bezugnahme auf Figur 2 genauer beschrieben wird.

Wie die Fig. 1 verdeutlicht, ist Teil des Knochenzementsystems auch die Vorratskammer 204. Die Vorratskammer 204 enthält einen Vorratsbehälter 202 für die Monomerflüssigkeit. Vorteilhafterweise handelt es sich bei dem Vorratsbehälter 202 um eine Ampulle. Uie Ampulle 202 umfasst einen Ampullenkopf 203 und einen darüber angeordneten Ampullenkörper. Zwischen dem Ampullenkopf 203 und dem Ampullenkörper befindet sich eine Sollbruchstelle.

Unterhalb des Ampullenkopfs 203 ist eine Auslassöffnung 206 in der Vorratskammer 204 vorgesehen. Die Oberseite der Vorratskammer 204 ist durch einen Deckel 207 verschlossen. Der Deckel 207 ist durch ein Gewinde oder einen anderen Verschlussmechanismus mit der Vorratskammer 204 verbunden.

Im Bereich des Ampullenkopfs 203 ist eine zylindrische Öffnung in den Wänden der Vorratskammer 204 vorgesehen, in der ein zylindrischer Stößel 209 entlang seiner Symmetrieachse beweglich angeordnet ist. Die Seite des Stößels 209, die in das Innere der Vorratskammer 204 reicht, ist abgeschrägt. Die Schräge soll dafür sorgen, dass der Ampullenkopf 203 leicht vom Ampullenkörper abbricht, wenn der Stößel 209 ins Innere der Vorratskammer 204 hineingeschoben wird. Dem gleichen Zweck kann eine Abschrägung an der dem Stößel 209 gegenüberliegenden Fixierung 205 der Ampulle dienen. Durch beide Maßnahmen soll die Kraft, die durch den Stößel 209 wirkt, auf die Brechzone konzentriert und verstärkt werden.

Die Wände der Vorratskammer 204 und der Deckel 207 sind druckstabil, erhalten also ihre Form auch dann, wenn im Inneren der Vorratskammer 204 ein Vakuum erzeugt wird. Der Stößel 209 steckt in gasdichter Presspassung in der Öffnung der Wände der Vorratskammer 204.

Die erfindungsgemäße Vorrichtung kann beispielsweise wie folgt betrieben werden: Zunächst wird an der Auslassöffnung 206 ein Unterdruck angelegt. Dadurch bildet sich auch im Inneren der Vorratskammer 204 ein Unterdruck aus. Die Druckdifferenz zwischen dem Inneren der Vorratskammer 204 und der äußeren Umgebung der Vorratskammer 204 führt dazu, dass auf der nach außen weisenden Fläche des Stößels 209 ein größerer Druck und damit eine größere Kraft wirkt, als auf der nach innen weisenden Fläche des Stößels 209. Der Stößel 209 erfährt daher eine resultierende Kraft, die ihn ins Innere der Vorratskammer 204 treibt. Sobald die Haftreibung des in Presspassung sitzenden Stößels 209 durch die resultierende Kraft überwunden ist, bewegt sich der Stößel 209 ins Innere der Vorratskammer 204. Schließlich wird der Stößel 209 auf den Ampullenkopf 203 treffen und diesen abscheren. Hierdurch wird die Ampulle 202 geöffnet. Der Inhalt der Ampulle 202 fließt aus dieser heraus und durch die Auslassöffnung 206 hindurch aus der Vorratskammer 204 ab.

Der Haftreibungswiderstand des Stößels 209 in der Öffnung der Vorratskammer 204 und/oder die Stabilität der Brechzone der Ampulle 202 beziehungsweise der Querschnitt des Stößels 209 können dabei so eingestellt werden, dass die Ampulle 202 erst dann geöffnet wird, wenn der Unterdruck in der Vorratskammer 204 dazu ausreicht, ein ausreichend blasenfreies Gemisch aus Monomerflüssigkeit und Knochenzementpulver zu erzeugen.

Die Monomerflüssigkeit fließt dann durch ein Leitungsmittel 122 aus der Vorratskammer 204 in die Mischvorrichtung 102. Das Überströmen der Monomerflüssigkeit wird dadurch verstärkt, dass im Mischraum 116 ein Unterdruck herrscht.

Wie Fig. 2 zeigt, weist die Mischvorrichtung 102 einen Kolbenraum und einen Mischraum 116 auf, welche durch eine Trennwand 111, welche einen Druckausgleich zulässt, voneinander abgetrennt sind. Der Kolbenraum ist durch einen Kolben 101 in zwei Kolbenraumabschnitte 103, 104 geteilt. In dem Kolben 101 ist ein Drehventil 105 angeordnet, das im geöffneten Zustand beide Kolbenraumabschnitte 103,104 miteinander verbindet. In geschlossenem Zustand sind die beiden Kolbenraumabschnitte 103, 104 gasdicht voneinander getrennt. Zwischen der Trennwand 111 zum Mischraum 116 und dem Kolben 101 ist ein Federelement 107 angeordnet, das den Kolben 101 im entspannten Zustand gegen die Innenwand einer Kolbenraumabdeckung 108 des ersten Kolbenraumabschnitts 103 drückt.

Wird nun Vakuum an den zweiten Kolbenraumabschnitt 104 angelegt und das Drehventil 105 befindet sich in geschlossenem Zustand, so wird ein Druckunterschied zwischen beiden Kolbenraumabschnitten 103 und 104 aufgebaut. Im zweiten Kolbenraumabschnitt 104 liegt ein niedrigerer Druck vor als im ersten Kolbenraumabschnitt 103. Durch diesen Druckunterschied wird der Kolben 101 gegen die Kraft des Federelementes 107 auf Trennwand 111 zubewegt. In unmittelbarer Nähe der Trennwand 111 schlägt ein am Drehventil angeordneter Stift 110 gegen die Trennwand 111 und wird durch diese gegen den Kolben 101 gedrückt, so dass sich das Drehventil 105 in die geöffnete Position bewegt. Es erfolgt ein Druckausgleich zwischen den beiden Kolbenraumabschnitten 103 und 104. Der Überdruck im ersten Kolbenraumabschnitt wird abgebaut und der Kolben 101 bewegt sich durch Rückstellkraft des Federelementes 107 in Richtung einer Kolbenraumabdeckung 108 des ersten Kolbenraumabschnitts 103. Dort schlägt ein zweiter am Drehventil angeordneter Stift 110 gegen die Kolbenraumabdeckung 108. Dadurch wird das Drehventil 105 in die geschlossene Position verstellt. Bei geschlossenem Drehventil 105 kann sich wieder ein Druckunterschied aufbauen, der den Kolben 101 wieder nach auf die Trennwand 111 zu bewegt. Dieser Vorgang wiederholt sich, solange Vakuum angelegt ist.

Durch die Auf- und Abbewegung wird ein Stab 113, der über ein Rotationsgelenk 114 an dem Kolben 101 befestigt ist, ebenfalls auf- und abbewegt. In den Stab 113 ist ein Gewinde 115 eingelassen, in das Zapfen 119 greifen, die in einer Öffnung der Trennwand 111 angeordnet sind. Durch die Auf-und Abbewegung des Stabes 113 und das Gewinde 115, das mit den Zapfen 119 in Eingriff steht, wird der Stab gleichzeitig in Rotation versetzt.

Mit einem am Stab 113 angebrachten Mischorgan 117 (siehe Fig. 1), das sich ebenfalls auf- und ab bewegt und gleichzeitig dreht, kann somit Knochenzement wirkungsvoll vermischt werden.

Bei dem vorliegenden Misch- und Lagersystem wird wie bei vielen bei neuartigen Vakuumzementiersystemen ohnehin ein Vakuum erzeugt, um beispielsweise eine Monomerflüssigkeit mit einem Knochenzement unter Vakuum zu mischen. Dieses Vakuum kann in der erfindungsgemäßen Vorrichtung auch gleichzeitig dazu genutzt werden, eine Abtrennung zwischen Monomerflüssigkeit und Mischraum zu öffnen, die Monomerflüssigkeit in den Mischraum zu übertragen und die Mischeinrichtung in Gang zu setzen.

### Bezugszeichenliste

- 100: Lager- und Mischvorrichtung
- 101: Kolben
- 102: Mischvorrichtung, Vorrichtung zum Mischen und Austragen von Knochenzement
- 103: Erster Kolbenraumabschnitt
- 104: Zweiter Kolbenraumabschnitt
- 105: Absperrorgan, Drehventil
- 107: elastisch rückstellendes Bauelement, Federelement
- 108: Kolbenraumabdeckung
- 109: Gaszuführung
- 110: Stifte
- 111: Trennwand
- 113: Stab, Gewindestange
- 114: Rotationsgelenk
- 115: Gewinde
- 116: Mischraum
- 117: Mischorgan
- 118: Gasauslass, Anschluss für eine Unterdruckquelle
- 119: Zapfen
- 120: Basislement
- 122: Verbindungsleitung
- 202: Vorratsbehälter, Ampulle
- 203: Ampullenkopf
- 204: Vorratskammer
- 205: Fixierung
- 206: Auslassöffnung
- 207: Deckel
- 209: Stößel

## Patentansprüche

1. Lager- und Mischvorrichtung (100) zum Mischen einer flüssigen Komponente und einer Feststoffkomponente wobei
eine erste, die Feststoffkomponente enthaltende Kammer durch eine zu öffnende Abtrennung von einer zweiten, die flüssige Komponente enthaltende Kammer getrennt ist, und
einen Anschluss (118) für eine Unterdruckquelle aufweist und
in der ersten Kammer eine durch Druckdifferenz antreibbare Mischeinrichtung (102) angeordnet ist,
**dadurch gekennzeichnet, dass**
es sich bei der ersten Kammer um einen Kolbenraum handelt, wobei ein Kolben (101) den Kolbenraum in einen ersten Kolbenraumabschnitt (103) und einen zweiten Kolbenraumabschnitt (104) teilt und ein Absperrorgan (105) aufweist, welches an den Kolbenumkehrpunkten umgeschaltet wird und in geöffnetem Zustand den ersten Kolbenraumabschnitt (103) mit dem zweiten Kolbenraumabschnitt (104) verbindet,
der Anschluss (118) für die Unterdruckquelle im zweiten Kolbenraumabschnitt (104) angeordnet ist,
ein elastisch rückstellendes Bauelement (107) zwischen dem Kolben (101) und einer dem Kolben gegenüberliegenden Trennwand (111) des zweiten Kolbenraumabschnitts (104) angeordnet ist,
eine Gaszuführung (109) im ersten Kolbenraumabschnitt (103) angeordnet ist,
und
ein Mischorgan (117) mit dem Kolben (101) verbunden ist.

2. Lager- und Mischvorrichtung nach Anspruch 1, **dadurch gekennzeichnet, dass** die erste Kammer als Feststoffkomponente ein Pulver und die zweite Kammer als flüssige Komponente eine Monomerflüssigkeit zur Herstellung von Knochenzement enthalten.

3. Lager- und Mischvorrichtung nach Anspruch 1 oder Anspruch 2, **dadurch gekennzeichnet, dass**
die in der ersten Kammer angeordnete Mischeinrichtung (102) über die Unterdruckquelle angetrieben wird.

4. Lager- und Mischvorrichtung nach einem der vorangehenden Ansprüche,
**dadurch gekennzeichnet, dass**
die Abtrennung zwischen erster und zweiter Kammer mittelbar oder unmittelbar durch die durch die Unterdruckquelle erzeugte Druckdifferenz mechanisch zu öffnen ist.

5. Lager- und Mischvorrichtung nach einem der vorhergehenden Ansprüche,
**dadurch gekennzeichnet, dass**
am Gasauslass (118) Vakuum angeschlossen ist.

6. Lager- und Mischvorrichtung nach Anspruch 5, **gekennzeichnet durch** ein Drehventil als Absperrorgan (105).

7. Lager- und Mischvorrichtung nach Anspruch 6, **dadurch gekennzeichnet, dass** zwei Stifte (110) am Außenumfang des Drehventils befestigt sind, die ausgehend von der Drehachse des Drehventils in einem Winkel von <180° zueinander angeordnet sind.

8. Lager- und Mischvorrichtung nach einem der vorangehenden Ansprüche,
**dadurch gekennzeichnet, dass**
eine Gewindestange (113) Kolben (101) und Mischorgan (117) miteinander verbindet und durch den zweiten Kolbenraumabschnitt (104) geführt ist,
die Gewindestange (113) über ein Rotationsgelenk (114) mit dem Kolben (101) verbunden ist, wobei das Gewinde (115) der Gewindestange (113) mit feststehenden Zapfen (119) in Eingriff steht.

9. Lager- und Mischvorrichtung nach einem der vorangehenden Ansprüche,
**dadurch gekennzeichnet, dass** die Abtrennung durch Druckdifferenz zu öffnen ist.

10. Lager- und Mischvorrichtung nach Anspruch 9, **dadurch gekennzeichnet, dass** in der zweiten Kammer ein Behälter (202) angeordnet ist, und
die Abtrennung durch eine Öffnungseinrichtung zu öffnen ist, welche beweglich in der zweiten Kammer gelagert ist und durch Druckdifferenz bewegbar ist.

11. Lager- und Mischvorrichtung nach Anspruch 10, **dadurch gekennzeichnet, dass** die Öffnungseinrichtung einen beweglich gelagerten, insbesondere zylindrischen Stößel (209) umfasst.

12. Lager- und Mischvorrichtung nach Anspruch 11, **dadurch gekennzeichnet, dass** der bewegliche Stößel (209) eine gabelförmige Führung zum Führen eines aufzubrechenden Teils des Behälters (202) umfasst und/oder die Innenseite des Stößels (209) abgeschrägt ist.

13. Lager- und Mischvorrichtung nach einem der Ansprüche 9 bis 11, **dadurch gekennzeichnet, dass**
der Behälter (202) eine Ampulle zur Aufnahme von Monomerflüssigkeit ist und die Lager- und Mischvorrichtung eine Verbindungsleitung (122) zwischen Behälter (202) und erster Kammer umfasst.

## Claims

1. Storage and mixing device (100) for mixing a liquid component and a solid component, whereby
a first chamber containing the solid component is separated from a second chamber containing the liquid component by means of a separation that can be opened, and
comprises a connector (118) for a vacuum source, and a mixing facility (102) that can be driven by pressure difference is arranged in the first chamber, **characterised in that**
the first chamber is a plunger space, whereby a plunger (101) sub-divides the plunger space into a first plunger space section (103) and a second plunger space section (104) and comprises a shut-off organ (105), which is switched at the plunger reversal points and, in open condition, connects the first plunger space section (103) to the second plunger space section (104),
the connector (118) for the vacuum source is arranged in the second plunger space section (104),
an elastic restoring element (107) is arranged between the plunger (101) and a separation wall (111) of the second plunger space section (104), which separation wall (111) is situated opposite from the plunger,
a gas feed (109) is arranged in the first plunger space section (103),
and
a mixing organ (117) is connected to the plunger (101).

2. Storage and mixing device according to claim 1,
**characterised in that**
the first chamber contains a powder as solid component and the second chamber contains a monomer liquid for the production of bone cement as liquid component.

3. Storage and mixing device according to claim 1 or claim 2,
**characterised in that**
the mixing facility (102) arranged in the first chamber is driven by means of the vacuum source.

4. Storage and mixing device according to any one of the preceding claims,
**characterised in that**
the separation between first and second chamber can be opened mechanically, directly or indirectly, by means of the pressure difference generated by the vacuum source.

5. Storage and mixing device according to any one of the preceding claims,
**characterised in that**
a vacuum is applied at the gas outlet (118).

6. Storage and mixing device according to claim 5,
**characterised by**
a rotary valve as shut-off organ (105).

7. Storage and mixing device according to claim 6,
**characterised in that**
two pins (110) are attached on the external circumference of the rotary valve and, originating from the rotary axis of the rotary valve, are arranged at an angle of < 180° with respect to each other.

8. Storage and mixing device according to any one of the preceding claims,
**characterised in that**
a threaded rod (113) connects plunger (101) and mixing organ (117) and is guided through the second plunger space section (104),
the threaded rod (113) is connected to the plunger (101) by means of a rotary joint, whereby the thread (115) of the threaded rod (113) engages fixed pegs (119).

9. Storage and mixing device according to any one of the preceding claims,
**characterised in that**
the separation can be opened by a pressure difference.

10. Storage and mixing device according to claim 9,
**characterised in that**
a container (202) is arranged in the second chamber and **in that** the separation can be opened by an opening facility that is supported as in a bearing in the second chamber and can be moved by a pressure difference.

11. Storage and mixing device according to claim 10,
**characterised in that**
the opening facility comprises a pestle (209) that is supported as in a bearing such as to be mobile and, in particular, is cylindrical.

12. Storage and mixing device according to claim 11,
**characterised in that**
the mobile pestle (209) comprises a fork-shaped guide for guiding a part of the container (202) that is to be ripped open and/or the pestle (209) is bevelled on the inside.

13. Storage and mixing device according to any one of the claims 9 to 11,
**characterised in that**
the container (202) is an ampoule for accommodation of monomer liquid and the storage and mixing device comprises a connecting line (122) between container (202) and first chamber.

## Revendications

1. Dispositif de stockage et de mélange (100) pour mélanger une composante liquide et une composante solide, dans lequel
une première chambre contenant la composante solide est séparée d'une seconde chambre contenant la composante liquide par une séparation à ouvrir, et
présente un raccordement (118) pour une source basse pression et
un dispositif de mélange (102) pouvant être commandé par différence de pression est disposé dans la première chambre,
**caractérisé en ce que**
la première chambre est un espace de piston, sachant qu'un piston (101) sépare l'espace de piston en un premier tronçon d'espace de piston (103) et un second tronçon d'espace de piston (104) et présente un organe d'arrêt (105), lequel est commuté sur les points d'inversion du piston et relie à l'état ouvert le premier tronçon d'espace de piston (103) au second tronçon d'espace de piston (104),
le raccordement (118) pour la source basse pression est disposé dans le second tronçon d'espace de piston (104),
un élément de construction élastique à rappel (107) est disposé entre le piston (101) et une paroi de séparation (111) du second tronçon d'espace de piston (104) opposée au piston,
une alimentation en gaz (109) est disposée dans le premier tronçon d'espace de piston (103),
et
un organe de mélange (117) est relié au piston (101).

2. Dispositif de stockage et de mélange selon la revendication 1,
**caractérisé en ce que**
la première chambre contient une poudre en tant que composante solide et la seconde chambre contient un liquide monomère en tant que composante liquide pour fabriquer un ciment osseux.

3. Dispositif de stockage et de mélange selon la revendication 1 ou 2,
**caractérisé en ce que**
le dispositif de mélange (102) disposé dans la première chambre est commandé par la source basse pression.

4. Dispositif de stockage et de mélange selon l'une des revendications précédentes,
**caractérisé en ce que**
la séparation entre la première et la seconde chambre est à ouvrir mécaniquement indirectement ou directement par la différence de pression produite par la source basse pression.

5. Dispositif de stockage et de mélange selon l'une des revendications précédentes,
**caractérisé en ce qu'**un
vide est raccordé à la sortie de gaz (118).

6. Dispositif de stockage et de mélange selon la revendication 5,
**caractérisé par** un
clapet rotatif en tant qu'organe d'arrêt (105).

7. Dispositif de stockage et de mélange selon la revendication 6,
**caractérisé en ce que**
deux tiges (110) sont fixées sur le pourtour extérieur du clapet rotatif, lesquelles sont disposées dans un angle de < 180° entre elles en partant de l'axe de rotation du clapet rotatif.

8. Dispositif de stockage et de mélange selon l'une des revendications précédentes,
**caractérisé en ce qu'**une
tige filetée (113) relie entre eux piston (101) et organe de mélange (117) et est dirigée à travers le second tronçon d'espace de piston (104), la tige filetée (113) est reliée au piston (101) par une articulation rotative (114), sachant que le filet (115) de la tige filetée (113) est mise en prise avec des tourillons fixes (119).

9. Dispositif de stockage et de mélange selon l'une des revendications précédentes,
**caractérisé en ce que**
la séparation est à ouvrir par différence de pression.

10. Dispositif de stockage et de mélange selon la revendication 9,
**caractérisé en ce qu'**un
récipient (202) est disposé dans la seconde chambre, et la séparation est à ouvrir par un dispositif d'ouverture qui est disposé en étant mobile dans la seconde chambre et peut être déplacé par différence de pression.

11. Dispositif de stockage et de mélange selon la revendication 10,
**caractérisé en ce que**
le dispositif d'ouverture comprend un poussoir (209) en particulier cylindrique disposé en étant mobile.

12. Dispositif de stockage et de mélange selon la revendication 11,
**caractérisé en ce que**
le poussoir mobile (209) comprend un guide en forme de fourche pour guider une partie du récipient (202) à casser et/ou que l'intérieur du poussoir (209) est biseauté.

13. Dispositif de stockage et de mélange selon l'une des revendications 9 à 11,
**caractérisé en ce que**
le récipient (202) est une ampoule pour recevoir du liquide monomère et le dispositif de stockage et de mélange comprend une ligne de liaison (122) entre le récipient (202) et la première chambre.
